(19) Europäisches Patentamt
European Patent Office
Office européen des brevets

(11) **EP 3 885 068 A1**

(12) **EUROPEAN PATENT APPLICATION**
published in accordance with Art. 153(4) EPC

(43) Date of publication:
**29.09.2021 Bulletin 2021/39**

(21) Application number: **19886214.6**

(22) Date of filing: **24.09.2019**

(51) Int Cl.:
**B23K 9/04** (2006.01)          **B23K 9/022** (2006.01)
**B23K 9/167** (2006.01)

(86) International application number:
**PCT/JP2019/037354**

(87) International publication number:
**WO 2020/105276 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.11.2018 JP 2018218740**

(71) Applicant: **Hitachi Zosen Corporation Osaka-shi, Osaka 559-8559 (JP)**

(72) Inventors:
• **NAKANO Masakatsu**
  **Osaka-shi, Osaka 559-8559 (JP)**
• **TANAKA Tomohiro**
  **Osaka-shi, Osaka 559-8559 (JP)**
• **HORIUCHI Takuro**
  **Osaka-shi, Osaka 559-8559 (JP)**
• **ABE Masamitsu**
  **Osaka-shi, Osaka 559-8559 (JP)**

(74) Representative: **Grünecker Patent- und Rechtsanwälte**
**PartG mbB**
**Leopoldstraße 4**
**80802 München (DE)**

(54) **BUTT WELDING METHOD FOR ULTRA-THICK PLATE, AND BUTT WELDING EQUIPMENT FOR ULTRA-THICK PLATE**

(57)     A butt welding method for a heavy wall steel plate is adapted to perform multi-layer welding for forming a lower layer, an intermediate layer including a plurality of layers, and an upper layer in a groove, the layers each including a weld bead. The step of forming the intermediate layer includes a single-layer forming step (S1) of forming the weld bead in the groove, a cooling step (S2) of cooling the weld bead to a predetermined temperature, and a post-cooling reheating step (S3) of reheating the cooled weld bead. Furthermore, the butt welding method for the heavy wall steel plate includes a stacking step (S4) of repeating a cycle as many times as the number of layers in the intermediate layer, the cycle including the single-layer forming step, the cooling step, and the post-cooling reheating step, and thus stacking the weld beads of layers necessary for the multi-layer welding.

FIG. 2

EP 3 885 068 A1

**Description**

Technical Field

The present invention relates to a butt welding method for a heavy wall steel plate, and butt welding equipment for the heavy wall steel plate.

Background Art

In multi-layer welding, weld beads formed in a layer are reheated by the heat of welding for forming weld beads thereon. If coarse crystal grains are generated in the weld beads, the toughness may decrease. However, the reheating generates fine crystal grains in the weld beads of the lower layer, thereby improving the toughness of the weld beads.
For example, as disclosed in Japanese Examined Patent Publication No. Sho 54-50446, an invention for improving toughness according to the foregoing principle is proposed, in which welding (reheating) is not performed on the uppermost layer and thus the welding beads of the uppermost layer are additionally reheated to improve toughness.

Summary of Invention

Technical Problem

Equipment for a plant, that is, stationary equipment such as a pressure vessel in a plant includes a steel plate having a thickness of at least 38 mm, that is, a heavy wall steel plate, obtaining resistance to high pressures. In the butt welding of such steel plates, deep grooves formed for heavy wall steel plates are narrowed to prevent a considerable increase in welding amount. Such a groove is so narrow as to form only a single weld bead in each layer of multi-layer welding.
In multi-layer welding in a narrow groove, the amount of welding heat for forming an upper layer is smaller than that of multi-layer welding in a wide groove, in which multiple weld beads are formed in each layer. Thus, multi-layer welding in a narrow groove results in lower toughness than that in multi-layer welding in a wide groove.
The inventors found the problem of a considerable reduction in toughness particularly in a layer around an intermediate point of an intermediate layer in multi-layer welding in such a narrow groove. The layer around the intermediate point is located in an intermediate portion of a heavy wall steel plate. Thus, even if welding heat for forming weld beads is obtained, the heat is likely to diffuse to the heavy wall steel plate, resulting in insufficient reheating. This prevents the formation of fine crystal grains in the layer around the intermediate point, thereby insufficiently improving toughness. This problem is noticeable because heat diffusion to the heavy wall steel plate increases with the thickness of the heavy wall steel plate.
The present invention relates to a butt welding method for a heavy wall steel plate, and butt welding equipment for the heavy wall steel plate, by which the toughness of multi-layer welding can be improved in a narrow groove of the heavy wall steel plate.

Solution to Problem

In order to solve the problem, a butt welding method for a heavy wall steel plate according to a first invention is a method adapted to perform multi-layer welding for forming a lower layer, an intermediate layer including a plurality of layers, and an upper layer in a groove, the layers each including a weld bead, wherein forming the intermediate layer includes:

single-layer forming of forming the weld bead in the groove;
cooling of cooling the weld bead to a predetermined temperature;
post-cooling reheating of reheating the cooled weld bead; and
stacking of repeating a cycle as many times as the number of layers in the intermediate layer, the cycle including the single-layer forming, the cooling, and the post-cooling reheating.

A butt welding method for a heavy wall steel plate according to a second invention, wherein the predetermined temperature in the butt welding method for the heavy wall steel plate according to the first invention is at most a temperature at which the weld bead reaches a martensitic transformation point.
A butt welding method for a heavy wall steel plate according to a third invention, wherein the weld bead is formed by weaving in the single-layer forming of the butt welding method for the heavy wall steel plate according to one of the first and second inventions.

Furthermore, a butt welding method for a heavy wall steel plate according to a fourth invention, wherein the weld bead is ferritic heat-resistant steel in the butt welding method for the heavy wall steel plate according to one of the first and second inventions.

Butt welding equipment for a heavy wall steel plate according to a fifth invention is equipment configured to perform multi-layer welding for forming layers in a groove, the layers each including a weld bead, the equipment including:

> a welding device configured to form the weld bead in the groove;
> a reheating device configured to reheat the weld bead;
> a fixture jig configured to fix the welding device and the reheating device at a predetermined distance apart; and
> a relative movement machine configured to relatively move the fixture jig along the groove so as to sequentially perform welding by the welding device and reheating by the reheating device; and
> a controller configured to control speed of the relative movement by the relative movement machine,
> wherein the predetermined distance and the speed are set such that the weld bead formed by the welding device is cooled to a predetermined temperature before being reheated by the reheating device.

Butt welding equipment for a heavy wall steel plate according to a sixth invention further includes a preheater configured to perform preheating in the butt welding equipment for the heavy wall steel plate according to the fifth invention, wherein based on a preheating temperature T [°C] of the preheater, a heat input Q [kJ/mm] of welding by the welding device, and a relative movement speed V [mm/min] of the relative movement machine, a predetermined distance L [mm] between the welding device and the reheating device satisfies Expression (1) below:

$$L \geq 60V\ (-290 + 1.10T + 44.3Q)\ \ldots\ldots(1).$$

Advantageous Effects of Invention

The butt welding method for the heavy wall steel plate and the butt welding equipment for the heavy wall steel plate sufficiently reheat the weld bead in a layer around an intermediate point where heat is likely to diffuse. This improves toughness by obtaining fine crystal grains.

Brief Description of Drawings

[FIG. 1] FIG. 1 is a cross-sectional view illustrating heavy wall steel plates used for a butt welding method for the heavy wall steel plates and butt welding equipment for the heavy wall steel plates according to an embodiment of the present invention, and the groove of the heavy wall steel plates.
[FIG. 2] FIG. 2 is a flowchart indicating the steps of the butt welding method for the heavy wall steel plates.
[FIG. 3] FIG. 3 is a cross-sectional view for explaining the principle of sufficiently reheating a layer around an intermediate point of weld metal formed in the groove of the heavy wall steel plates.
[FIG. 4] FIG. 4 is a schematic perspective view illustrating weaving welding applied to the butt welding method for the heavy wall steel plates.
[FIG. 5A] FIG. 5A is a cross-sectional view illustrating heavy wall steel plates used for an experimental example of the butt welding method for the heavy wall steel plates, and the groove of the heavy wall steel plates.
[FIG. 5B] FIG. 5B is a schematic perspective view illustrating instruments used in the experimental example.
[FIG. 6A] FIG. 6A is a photograph indicating the shape of penetration of weld metal in the experimental example and the result of a conventional welding method.
[FIG. 6B] FIG. 6B is a photograph indicating the shape of penetration of weld metal in the experimental example and the result of the welding method of the present invention.
[FIG. 7A] FIG. 7A is a schematic diagram of FIG. 6A.
[FIG. 7B] FIG. 7B is a schematic diagram of FIG. 6B.
[FIG. 8A] FIG. 8A is a cross-sectional view indicating the collection position of a test piece in the heavy wall steel plate for a Charpy impact test in the experimental example.
[FIG. 8B] FIG. 8B is a graph indicating the results of the Charpy impact test in the experimental example.
[FIG. 9A] FIG. 9A is a photograph of the sectional structure of the weld metal formed by the conventional welding method in the experimental example.
[FIG. 9B] FIG. 9B is a photograph of the sectional structure of the weld metal formed by the welding method of the present invention in the experimental example.

[FIG. 10] FIG. 10 is a schematic side view illustrating butt welding equipment for the heavy wall steel plates.

Description of Embodiment

A butt welding method for a heavy wall steel plate and butt welding equipment for the heavy wall steel plate according to an embodiment of the present invention will be described below in accordance with the accompanying drawings.

First, the heavy wall steel plate and a groove, for which the butt welding method and the butt welding equipment are used, will be described below according to the present embodiment.

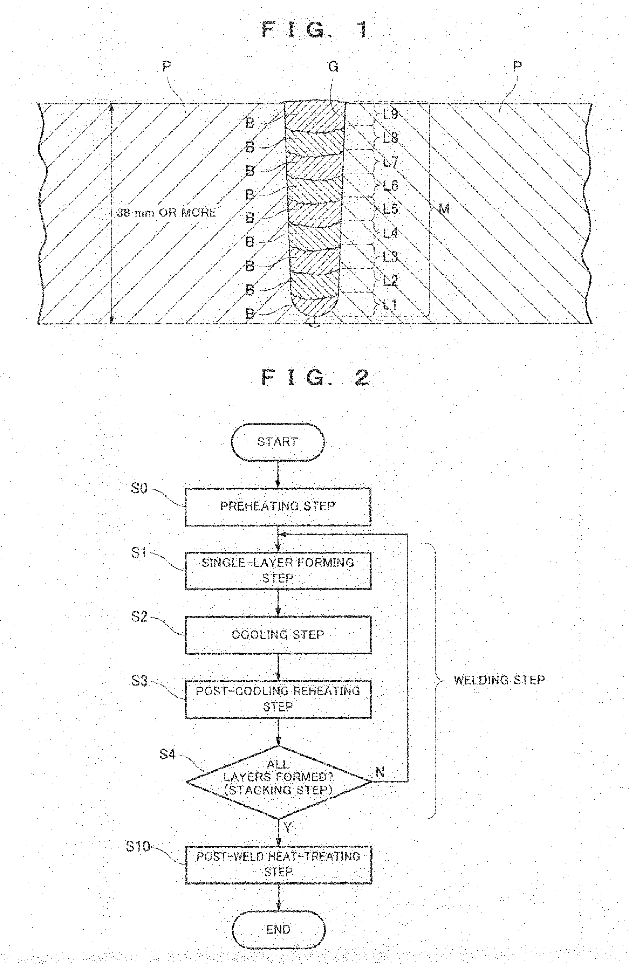

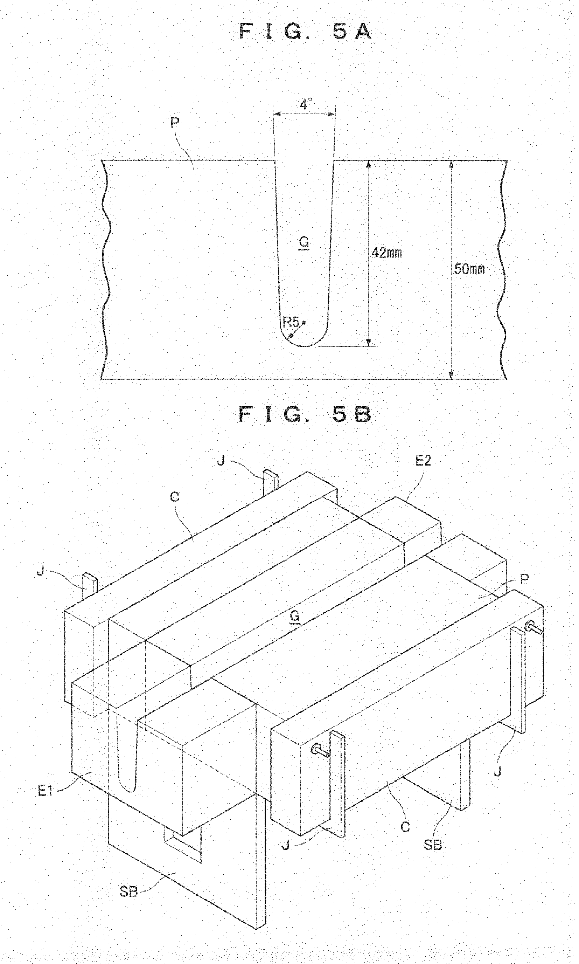

As illustrated in FIG. 1, the heavy wall steel plate P is a steel plate having a thickness of 38 mm or more. The two heavy wall steel plates P, P are butt-joined to form a narrow groove G for joining by multi-layer welding. The groove G is so narrow (wide) as to form a single weld bead B in each of layers L1 to L9 of weld metal M that is formed by the multi-layer welding. FIG. 1 illustrates, as an example, the weld metal M formed by stacking the nine weld beads B of the first to ninth layers L1 to L9. The weld metal M includes a lower layer, an intermediate layer, and an upper layer. The lower layer and the upper layer may each have a thickness of about 10% or less relative to the thickness of the heavy wall steel plate P or may be at most about 10 mm in thickness. The lower layer and the upper layer may each include a single layer or multiple layers. The intermediate layer is interposed between the lower layer and the upper layer and includes a plurality of layers. In the example of FIG. 1, the lower layer includes the first layer L1 and the second layer L2, the intermediate layer includes the third to seventh layers L3 to L7, and the upper layer includes the eighth layer L8 and the ninth layer L9. In an experimental example (FIG. 5A), which will be described later, the lower layer and the upper layer each includes four layers (about 10 mm in thickness).

[The butt welding method for the heavy wall steel plates P]

Referring to FIG. 2, the butt welding method for the heavy wall steel plates P, which are provided for performing multi-layer welding in the groove G as illustrated in FIG. 1, will be described below.

As indicated in FIG. 2, the butt welding method for the heavy wall steel plates P includes a preheating step (S0) of preheating, a single-layer forming step (S1) of forming a weld bead B in the groove G, a cooling step (S2) of cooling the weld bead B to a predetermined temperature, and a post-cooling reheating step (S3) of reheating the cooled weld bead B. If the weld metal M formed by the multi-layer welding includes N layers (FIG. 1 illustrates, for example, nine layers), a cycle including the single-layer forming step (S1), the cooling step (S2), and the post-cooling reheating step (S3) is repeated N times (only a necessary number of times, e.g., nine times in FIG. 1). This repetition stacks, as a stacking step (S4), the weld beads B of the N layers necessary for the multi-layer welding. The butt welding method for the heavy wall steel plates P includes, as the subsequent step, a post-weld heat-treating step (S10) of performing post-weld heat treatment. The single-layer forming step (S1), the cooling step (S2), the post-cooling reheating step (S3), and the stacking step (S4) may be collectively referred to as a welding step (S1 to S4). In the welding step, all the layers (for example, all the nine layers in FIG. 1) of the weld metal M may be formed. At least the intermediate layer is formed in this step.

In this case, the preheating step (S0) and the post-weld heat-treating step (S10) are not always necessary. In other words, the butt welding method for the heavy wall steel plates P optionally includes the preheating step (S0) and the post-weld heat-treating step (S10).

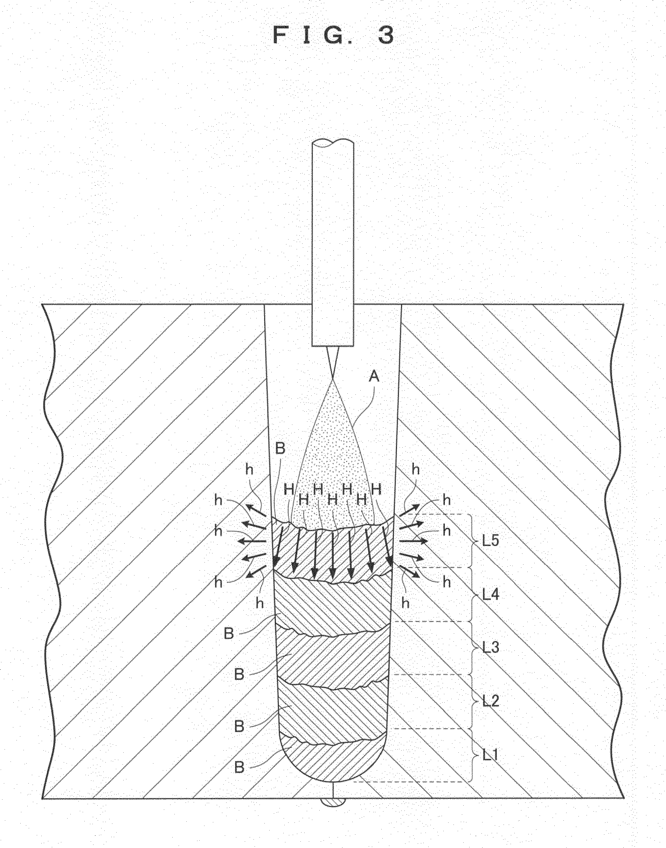

Through the single-layer forming step (S1), the cooling step (S2), and the post-cooling reheating step (S3), the weld beads B formed in the single-layer forming step (S1) contain fine crystal grains due to reheating after cooling. Each time the weld bead B is formed, the weld bead B is reheated after being cooled to the predetermined temperature. Thus, as illustrated in FIG. 3, heat H from, for example, an arc A for reheating is sufficiently obtained also for the weld bead B in the layer (e.g., the fifth layer L5 in FIG. 3) around an intermediate point of the intermediate layer where the heat h is likely to diffuse. Thus, the weld bead B is sufficiently reheated.

The predetermined temperature is preferably at most a temperature at which the weld bead B reaches a martensitic transformation point. Specifically, this is because the weld bead B cooled to have a martensitic structure is reheated so as to obtain finer crystal grains. The predetermined temperature in particular is more preferably equal to or lower than a temperature at which the weld bead B has a martensitic transformation rate of 50% is. Specifically, this is because the weld bead B cooled to have a martensitic transformation rate of at least 50% is reheated so as to obtain much finer crystal grains.

Thus, the butt welding method for the heavy wall steel plates P sufficiently reheats the weld bead B in the layer around the intermediate point where heat is likely to diffuse. This improves toughness by obtaining fine crystal grains.

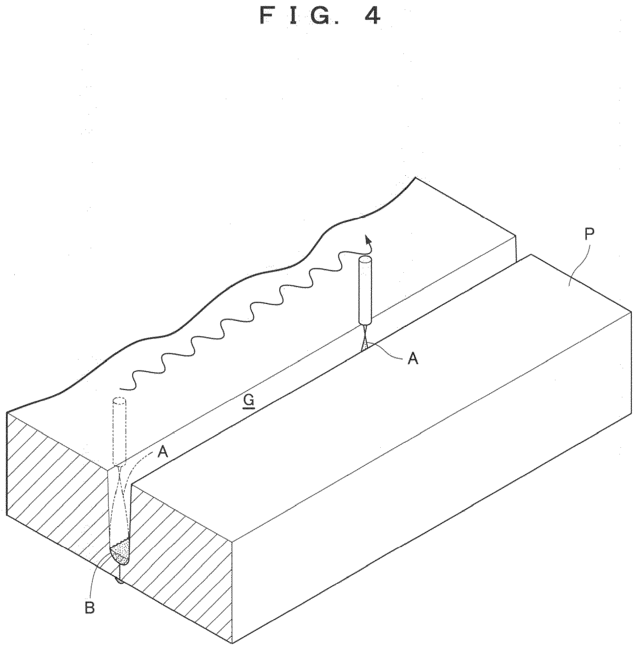

In the single-layer forming step (S1), the single weld bead B may be formed in the groove G by weaving welding as illustrated in FIG. 4 or other welding methods. Weaving welding increases heat applied to a lower layer and thus more sufficiently reheats each layer, achieving higher toughness.

The weld metal M may be ferritic heat-resistant steel. Since the weld metal M is ferritic heat-resistant steel, toughness is considerably improved by reheating, achieving higher toughness.

Moreover, the heavy wall steel plate P, which is illustrated as a steel plate having a thickness of at least 38 mm, is preferably a steel plate having a thickness of at least 40 mm and is more preferably a steel plate having a thickness of at least 50 mm. This is because a steel plate having a thickness of at least 40 mm can considerably improve toughness in a layer around the intermediate point of the intermediate layer where toughness is likely to decrease in the weld metal M. This trend is further intensified in a steel plate having a thickness of at least 50 mm.

[Experimental example]

According to an experiment, it was confirmed that the butt welding method for the heavy wall steel plate improves toughness. The conditions and results of the experiment will be indicated below as an experimental example.

In the present experiment, as illustrated in FIG. 5A, the heavy wall steel plate P was a steel plate having a thickness of 50 mm with the U-shaped narrow groove G formed thereon. The groove G was 42 mm in depth with the bottom having a curved surface of 5 mm radius of curvature R5 and the sides extending upward at 4°. As illustrated in FIG. 5B, the bottom of the heavy wall steel plate P was supported by retainers SB while water cooling systems C were fixed in contact with both sides of the heavy wall steel plate P by support members J, the sides extending in parallel with the longitudinal direction of the groove G. Furthermore, a starting-end tab E1 and a trailing-end tab E2 were connected to both sides of the heavy wall steel plate P, the sides extending perpendicularly to the longitudinal direction of the groove G.

Table 1 indicates the chemical components of the heavy wall steel plate P and a weld wire used for multi-layer welding.

[Table 1]

| | | | | | | | | | | | | | (mass %) |
|---|---|---|---|---|---|---|---|---|---|---|---|---|---|
| | C | Mn | P | S | Cu | Si | Cr | Mo | V | Nb | N | Al | Ni |
| Heavy wall steel plate | 0.10 | 0.43 | 0.011 | 0.001 | 0.03 | 0.32 | 8.69 | 0.95 | 0.22 | 0.08 | 0.046 | 0.008 | 0.11 |
| Weld wire | 0.11 | 0.74 | 0.006 | 0.004 | 0.02 | 0.26 | 9.07 | 1.02 | 0.17 | 0.06 | 0.040 | <0.01 | 0.50 |

Table 2 indicates the conditions of multi-layer welding performed on the groove G formed on the heavy wall steel plate P. Moreover, hot wire TIG welding was used, a preheat temperature and an interpass temperature were set at 200 to 270°C during welding, and heat applied for reheating was about 70% of heat applied for welding. These conditions are not indicated in Table 2.

[Table 2]

| | | Conventional (not reheated) | | Present invention (reheated) | | |
|---|---|---|---|---|---|---|
| | | First layer | Second and subsequent layers | First layer | Second and subsequent layers | Reheat |
| Welding speed [mm/min] | | 60 | 60 | 60 | 60 | 60 |
| Weld wire feeding speed [mm/min] | Peak | 850 | 1400 | 830 | 1400 | - |
| | Base | 850 | 1350 | 830 | 1350 | - |
| Welding current [A] | Peak | 220 | 280 | 220 | 280 | 210 |
| | Base | 180 | 280 | 180 | 280 | - |
| Hot wire current [A] | | 0 | 30 | 0 | 30 | - |
| Welding voltage [V] | | 11.5 | 11.5 | 11.5 | 12 | 11.5 |
| Welding electrode rotation | Angle [deg] | 90 | 90 | 90 | 90 | - |
| | Revolution per second [rps] | 0.5 | 0.5 | 0.5 | 0.5 | - |

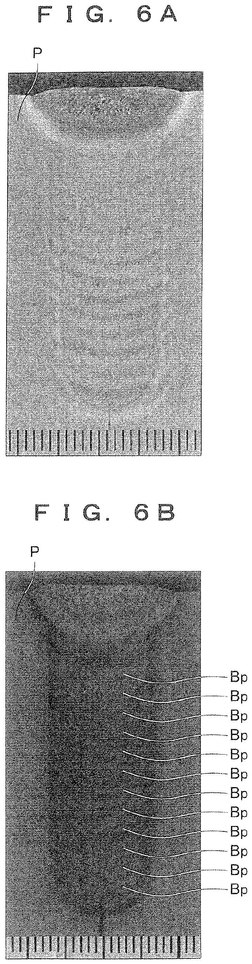

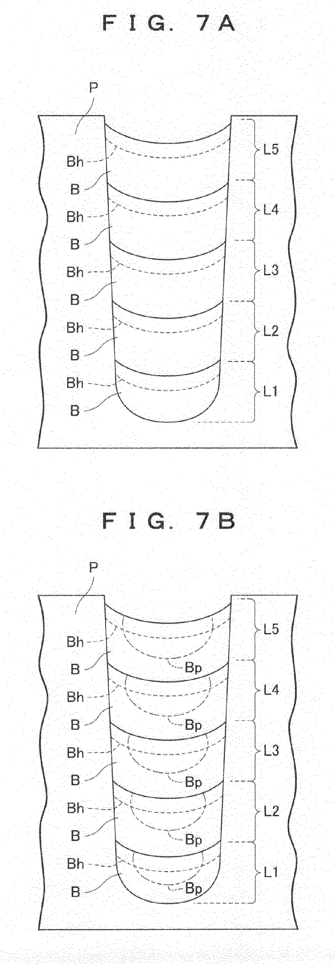

The following is a comparison between the shapes of penetration of the weld metal formed in the groove G in the present experiment. FIG. 6A is a photograph of the shape of penetration of the weld metal formed by a conventional welding method. FIG. 6B is a photograph of the shape of penetration of the weld metal formed by the welding method of the present invention. FIG. 7A is a schematic diagram illustrating the shape of penetration of the weld metal formed by the conventional welding method. FIG. 7B is a schematic diagram illustrating the shape of penetration of the weld metal formed by the welding method of the present invention. In other words, FIGS. 6A and 7A indicate the shape of penetration of the weld metal formed by the conventional welding method while FIGS. 6B and 7B indicate the shape of penetration of the weld metal formed by the welding method of the present invention. In FIGS. 6A and 7A and FIGS. 6B and 7B, heat Bh was applied by welding for forming an upper layer. In FIGS. 6B and 7B, however, a semioval penetration Bp was found in the weld bead B of a layer constituting the weld metal unlike in FIGS. 6A and 7A. This proved that the welding method of the present invention more sufficiently reheated the weld bead B of each layer than the conventional welding method did.

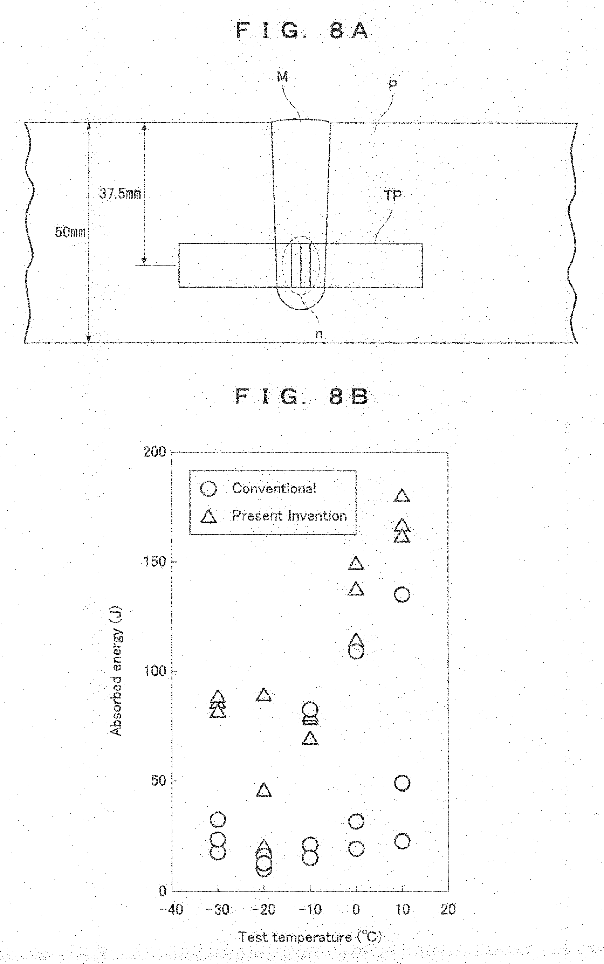

In order to confirm that weld metal formed by the welding method of the present invention has high toughness, post-weld heat treatment (a holding temperature: 750°C, a holding time: 10 hours) and Charpy impact tests subsequent to the treatment were conducted on weld metal formed by the conventional welding method and weld metal formed by the welding method of the present invention. In the Charpy impact tests, as illustrated in FIG. 8A, a test piece TP was collected from a depth (specifically, a depth of 37.5 mm) that is three quarters of 50 mm, the thickness of the heavy wall steel plate P. The position of a notch n on the test piece TP served as the central portion of the weld metal M. In the Charpy impact tests, test temperatures were set as indicated in Table 3, and three tests were conducted at each of the test temperatures.

[Table 3]

|  | Test temperature [°C] | | | | |
| --- | --- | --- | --- | --- | --- |
| Conventional (not reheated) | -30 | -20 | -10 | 0 | 10 |
| Present invention (reheated) | -30 | -20 | -10 | 0 | 10 |

FIG. 8B indicates the results of the Charpy impact tests. In the graph of FIG. 8B, the horizontal axis indicates a test temperature [°C] while the vertical axis indicates Charpy-impact absorbed energy [J]. As indicated in FIG. 8B, the welding method of the present invention plotted with deltas had higher Charpy-impact absorbed energy on the average than that of the conventional welding method plotted with circles. This trend was noticeable particularly at a low test temperature, e.g., -30°C. High Charpy-impact absorbed energy is equivalent to high toughness. Thus, the Charpy impact tests proved that the weld metal M formed by the welding method of the present invention has higher toughness than that of the weld metal M formed by the conventional welding method.

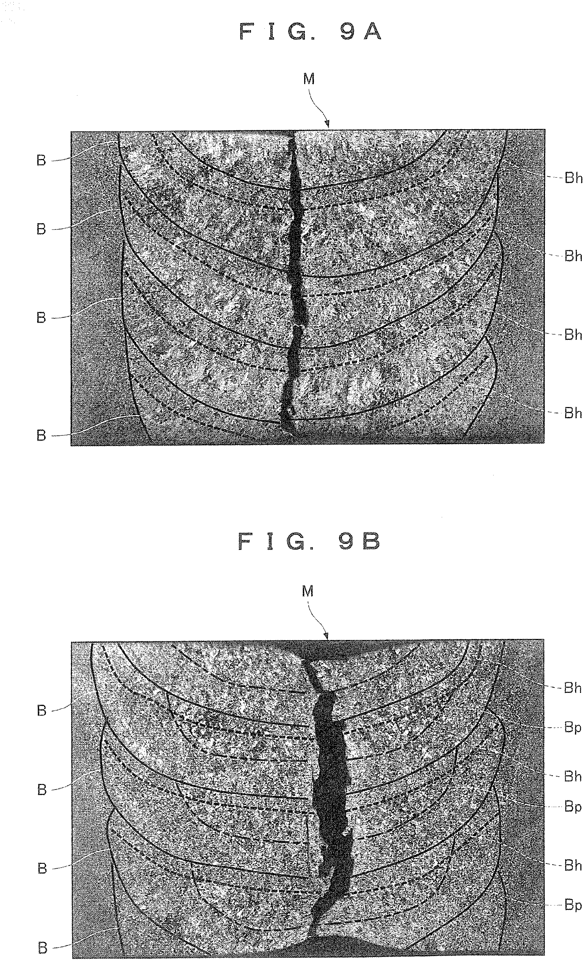

After the Charpy impact tests, the sectional structures of the test pieces TP were compared with each other. FIG. 9A is a photograph of the sectional structure of the weld metal formed by the conventional welding method. FIG. 9B is a photograph of the sectional structure of the weld metal formed by the welding method of the present invention. Solid lines, chain lines, and chain double-dashed lines in FIGS. 9A and 9B were additionally drawn on the photographs to enhance understanding. In FIG. 9A, the amount of the heat Bh applied by welding for forming an upper layer was small, resulting in a large area of coarse columnar crystals and forming coarse crystal grains over the structure. In other words, the weld metal M formed by the conventional welding method had coarse crystal grains over the structure. In contrast, in FIG. 9B, heat applied for reheating was about 70% of heat applied for welding, and any coarse columnar crystals were not found in the semioval penetrations Bp formed by reheating. The sufficient heat applied by reheating generated fine crystal grains over the weld metal M formed by the welding method of the present invention. The comparison between FIGS. 9A and 9B proves that the weld metal M formed by the welding method of the present invention had finer crystal grains than those of the weld metal M formed by the conventional welding method, achieving high toughness.

[Butt welding equipment 1 for the heavy wall steel plates P]

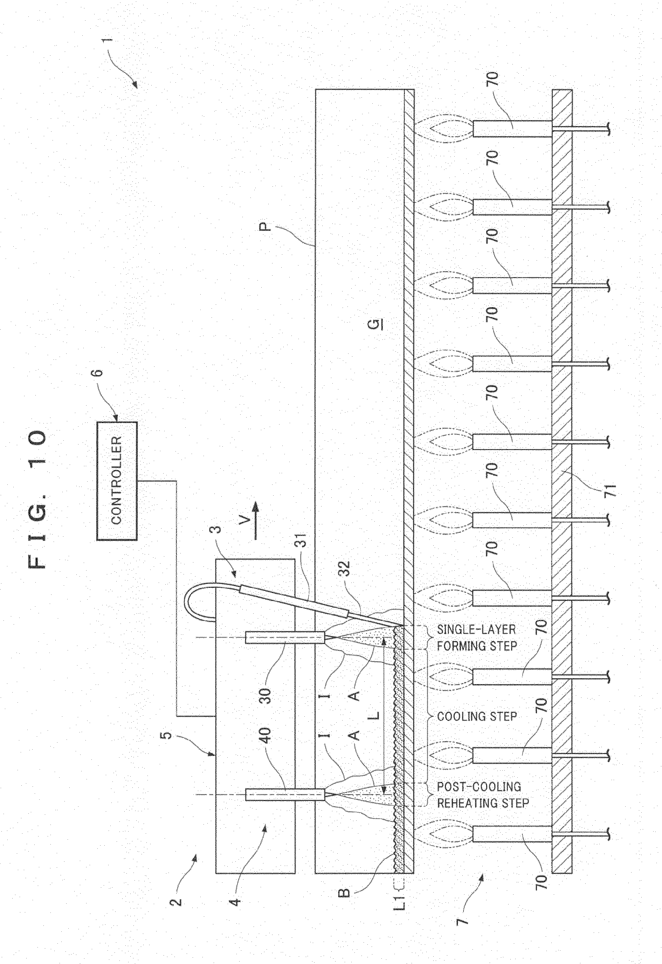

Referring to FIG. 10, the butt welding equipment for the heavy wall steel plates P will be described below. The butt welding equipment is an equipment configured to use the butt welding method of the heavy wall steel plates P.

In the following description, the configurations described in the butt welding method for the heavy wall steel plates P are indicated by the same reference numerals, and the explanation thereof is omitted. The butt welding equipment 1 for the heavy wall steel plates P in FIG. 10 is merely exemplary. The configuration may be partially deleted or changed, provided that at least part of the butt welding method for the heavy wall steel plates P is used by the equipment.

As illustrated in FIG. 10, the butt welding equipment 1 for the heavy wall steel plates P includes welding

6

equipment 2 configured to stack the weld beads B of layers necessary for the multi-layer welding. Moreover, the butt welding equipment 1 for the heavy wall steel plates P optionally includes a preheater 7 configured to perform preheating in the preheating step (S0) in FIG. 2, and post-weld heat treatment equipment (not illustrated) for post-weld heat treatment in the post-weld heat-treating step (S10) in FIG. 2. Needless to say, the preheater 7 and the post-weld heat treatment equipment are not always necessary for the butt welding equipment 1 for the heavy wall steel plates P. As illustrated in FIG. 10, the preheater 7 includes, for example, multiple gas burners 70 for heating the heavy wall steel plates P over fire, and a pedestal 71 supporting the gas burners 70. The post-weld heat treatment equipment, which is not illustrated, is disposed at a different location from the welding equipment 2 and the preheater 7, for example. The post-weld heat treatment equipment may be a large annealing furnace for heating the weld metal M along with the heavy wall steel plates P joined by multi-layer welding or an electric heater for locally heating the weld metal M and a portion near the weld metal M.

The welding equipment 2 includes a welding device 3 configured to form the weld bead B in the groove G, and a reheating device 4 configured to reheat the weld bead B. Moreover, the welding equipment 2 includes a traveling machine 5 (an example of a fixture jig and a relative movement machine) on which the welding device 3 and the reheating device 4 are fixed at a predetermined distance L apart. The traveling machine 5 travels along the groove G so as to sequentially perform welding by the welding device 3 and reheating by the reheating device 4. The welding equipment 2 further includes a controller 6 configured to control a traveling speed (that is, a welding speed) V of the traveling machine 5. The predetermined distance L and the traveling speed V are set such that the weld bead B formed by the welding device 3 is cooled to a martensitic transformation rate of at least 50% before being reheated by the reheating device 4. The controller 6 may control the heavy wall steel plates P moving at the speed V relative to the fixed traveling machine 5, instead of the traveling speed V of the traveling machine 5. The controller 6 may control the traveling machine 5 and the heavy wall steel plates P moving with a relative velocity equal to the speed V. In this case, the welding equipment 2 includes the fixture jig configured to fix the welding device 3 and the reheating device 4 at the predetermined distance L apart, and the relative movement machine configured to relatively move the fixture jig along the groove G so as to sequentially perform welding by the welding device 3 and reheating by the reheating device 4, which are not illustrated.

The welding device 3 of the welding equipment 2 includes an electrode 30 for generating the arc A, and a weld-wire feeding unit 31 for feeding a weld wire 32 to the arc A. The reheating device 4 includes an electrode 40 for generating the arc A. The electrode 30 of the welding device 3 and the electrode 40 of the reheating device 4 are respectively configured to supply shielding gas I. In this case, the traveling machine 5 travels such that the electrode 30 of the welding device 3 moves ahead of the electrode 40 of the reheating device 4. Hereinafter, the electrode 30 of the welding device 3 will be referred to as the front electrode 30 while the electrode 40 of the reheating device 4 will be referred to as the rear electrode 40. The front electrode 30 and the rear electrode 40 are placed at the predetermined distance L apart, so that the weld bead B formed by the front electrode 30 is cooled before being reheated by the rear electrode 40. Parameters including the predetermined distance L, the amount of heat for welding by the electrode 30, and the traveling speed V of the traveling machine 5 are set such that the cooling serves as the cooling step. For example, if the butt welding equipment 1 for the heavy wall steel plates P includes the preheater 7 configured to perform preheating, the predetermined distance L [mm] between the welding device 3 (front electrode 30) and the reheating device 4 (rear electrode 40) preferably satisfies the following Expression (1) based on a preheating temperature T [°C] of the preheater 7, a heat input Q [kJ/mm] of welding by the welding device 3, and the traveling speed V [mm/min] of the traveling machine 5.

$$L \geq 60V \, (-290 + 1.10T + 44.3Q) \quad \ldots\ldots(1)$$

Expression (1) was derived from an examination by the inventors as follows: First, by welding analysis software, a minimum temperature drop was found in the uppermost layer of weld metal for multi-layer welding. Subsequently, times t[s] for cooling the uppermost layer to 350°C, at which a martensitic transformation rate was at least 50%, were calculated. Table 4 indicates the calculated times t. The parameters changed for calculating the times t[s] were the preheating temperature T [°C] and the heat input Q [kJ/mm] of welding.

[Table 4]

| | | Welding heat amount Q[kJ/mm] | | |
|---|---|---|---|---|
| | | 2.88 | 3.24 | 3.60 |
| Preheating temperature T [°C] | 220 | t= 85 | t= 98 | t=111 |
| | 250 | t=110 | t=126 | t=142 |
| | 270 | t=135 | t=153 | t=173 |

A regression equation was calculated from data obtained in Table 4. The regression equation is calculated as Expression (2) below.

$$t = -290 + 1.10T + 44.3Q \quad ......(2)$$

The predetermined distance L [mm] between the front electrode 30 and the rear electrode 40 is at least a distance determined by multiplying the traveling speed V [mm/min] by the time t[s] $\times$ 60 (the unit of s is converted to min) and thus can be expressed as follows:

$$L \geq V \times t \times 60$$
$$\geq 60 \ Vt \quad ......(3)$$

The right side (equivalent to t) of Expression (2) is substituted for t of Expression (3), which determines Expression (1) below.

$$L \geq 60V \ (-290 + 1.10T + 44.3Q) \quad ......(1)$$

Thus, if Expression (1) is satisfied, the weld bead B formed by the front electrode 30 is cooled to 350°C, at which the martensitic transformation rate is at least 50%, before the weld bead B is reheated by the arc A from the rear electrode 40. Specifically, the weld bead B serving as the uppermost layer of weld metal is cooled to 350°C, at which the martensitic transformation rate is at least 50%, while the weld beads B serving as layers other than the uppermost layer of the weld metal (layers under the uppermost layer) are cooled to a temperature lower than 350°C. Hence, if Expression (1) is satisfied, the weld beads B are reheated after being sufficiently cooled, thereby remarkably improving toughness through reheating.

As has been discussed, the Butt welding equipment 1 for the heavy wall steel plates P is used according to the butt welding method for the heavy wall steel plates P, achieving the effect of the method.

Moreover, if Expression (1) is satisfied, the toughness is remarkably improved by reheating, achieving higher toughness.

Furthermore, the weld bead B is formed, is properly cooled, and then is reheated only through the traveling of the traveling machine 5, thereby shortening the construction time.

The foregoing embodiment is merely exemplary and is not restrictive in all the aspects. The scope of the present invention is indicated by not the foregoing description but the claims. The scope of the present invention is intended to include meanings equivalent to the claims and all changes in the scope. From among the configurations described in the embodiment, the configurations other than those described as the first and fifth inventions in "Solution to Problem" are optional and thus can be deleted and changed as appropriate.

**Claims**

1. A butt welding method for a heavy wall steel plate, the method being adapted to perform multi-layer welding for forming a lower layer, an intermediate layer including a plurality of layers, and an upper layer in a groove, the layers each including a weld bead,
   wherein forming the intermediate layer includes:

   single-layer forming of forming the weld bead in the groove;

cooling of cooling the weld bead to a predetermined temperature;
post-cooling reheating of reheating the cooled weld bead; and
stacking of repeating a cycle as many times as the number of layers in the intermediate layer, the cycle including the single-layer forming, the cooling, and the post-cooling reheating.

2. The butt welding method for a heavy wall steel plate according to claim 1, wherein the predetermined temperature is at most a temperature at which the weld bead reaches a martensitic transformation point.

3. The butt welding method for a heavy wall steel plate according to one of claims 1 and 2, wherein the weld bead is formed by weaving in the single-layer forming.

4. The butt welding method for a heavy wall steel plate according to one of claims 1 and 2, wherein the weld bead is ferritic heat-resistant steel.

5. Butt welding equipment for a heavy wall steel plate, the equipment being configured to perform multi-layer welding for forming layers in a groove, the layers each including a weld bead, the equipment comprising:

a welding device configured to form the weld bead in the groove;
a reheating device configured to reheat the weld bead;
a fixture jig configured to fix the welding device and the reheating device at a predetermined distance apart; and
a relative movement machine configured to relatively move the fixture jig along the groove so as to sequentially perform welding by the welding device and reheating by the reheating device; and
a controller configured to control speed of the relative movement by the relative movement machine,
wherein the predetermined distance and the speed are set such that the weld bead formed by the welding device is cooled to a predetermined temperature before being reheated by the reheating device.

6. The butt welding equipment for a heavy wall steel plate according to claim 5, further comprising a preheater configured to perform preheating,
wherein based on a preheating temperature T [°C] of the preheater, a heat input Q [kJ/mm] of welding by the welding device, and a relative movement speed V [mm/min] of the relative movement machine, a predetermined distance L [mm] between the welding device and the reheating device satisfies Expression (1) below:

$$L \geq 60V \, (-290 + 1.10T + 44.3Q) \quad \ldots \ldots (1).$$

## F I G. 1

P   G   P

B — L9
B — L8
B — L7
B — L6
38 mm OR MORE   B — L5   M
B — L4
B — L3
B — L2
B — L1

## F I G. 2

START

S0 — PREHEATING STEP

S1 — SINGLE-LAYER FORMING STEP

S2 — COOLING STEP

S3 — POST-COOLING REHEATING STEP

S4 — ALL LAYERS FORMED? (STACKING STEP) — N

WELDING STEP

Y

S10 — POST-WELD HEAT-TREATING STEP

END

F I G. 3

F I G.  4

# F I G. 5 A

4°

P

G

42mm

50mm

R5

# F I G. 5 B

J

E2

C

J

P

G

E1

J

J

SB

C

SB

# F I G. 6 A

P

# F I G. 6 B

P

Bp
Bp
Bp
Bp
Bp
Bp
Bp
Bp
Bp
Bp
Bp
Bp

# F I G . 7 A

# F I G . 7 B

EP 3 885 068 A1

# F I G.  8 A

# F I G.  8 B

16

# F I G. 9 A

# F I G. 9 B

17

FIG. 10

EP 3 885 068 A1

# INTERNATIONAL SEARCH REPORT

| | International application No. |
|---|---|
| | PCT/JP2019/037354 |

**A. CLASSIFICATION OF SUBJECT MATTER**
Int. Cl. B23K9/04(2006.01)i, B23K9/022(2006.01)i, B23K9/167(2006.01)i

According to International Patent Classification (IPC) or to both national classification and IPC

**B. FIELDS SEARCHED**

Minimum documentation searched (classification system followed by classification symbols)
Int. Cl. B23K9/04, B23K9/022, B23K9/167

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-327371 A (NIPPON KYORYO KK) 16 November 1992, | 1, 3-5 |
| A | claim 1, paragraphs [0012]-[0019], fig. 1-7 (Family: none) | 2, 6 |
| A | JP 2002-361469 A (MITSUBISHI HEAVY INDUSTRIES, LTD.) 18 December 2002, paragraphs [0020]-[0035], fig. 1-4 (Family: none) | 1-6 |
| A | WO 2016/088364 A1 (JFE STEEL CORP.) 09 June 2016, claims 1-3 & US 2017/0355038 A1, claims 1-4 & EP 3228413 A1 & AU 2015356483 A & CA 2966719 A | 1-6 |
| A | JP 2000-102871 A (KOBE STEEL, LTD.) 11 April 2000, paragraphs [0018]-[0025], fig. 1-4 (Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05.12.2019 | 17.12.2019 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2019/037354

C (Continuation). DOCUMENTS CONSIDERED TO BE RELEVANT

| Category* | Citation of document, with indication, where appropriate, of the relevant passages | Relevant to claim No. |
|---|---|---|
| A | JP 54-50446 A (NKK CORP.) 20 April 1979, page 2, lower left column, line 1 to page 8, upper left column, line 8 (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5450446 B